# EUROPEAN PATENT APPLICATION

(11) **EP 3 309 867 A1**
(43) Date of publication of application: **18.04.2018**
(21) Application number: 17196096.6
(22) Date of filing: 12.10.2017
(51) Int. Cl.: H01M 2/14, H01M 2/16, H01M 2/18, H01M 2/08

(54) **ELECTRICAL INSULATOR AND ITS RELATED BATTERY**

(30) Priority: 13.10.2016 TW 105133021
(71) Applicant: Prologium Technology Co., Ltd., Taoyuan City 320 (TW); Prologium Holding Inc., Grand Cayman, KY1-1104 (KY)
(72) Inventor: YANG, Szu-Nan, Taoyuan City 320 (TW)
(74) Representative: Cabinet Chaillot

(57) **Abstract**

An electrical insulator and its related battery are disclosed in the present invention. The electrical insulator includes a separation region and a supporting region. The supporting region is disposed and covers the peripheral surface and at least a part of the lateral surface of the separation region. The battery includes the electrical insulator mentioned above. The electrical insulator is disposed between active material layers and contacts with the active material layers directly. The cathode and the anode active material layers are completely electrical isolated because the electrical insulator totally covers at least one active material layer orthographically. Hence, the inner short of the battery may be prevented.

## Description

### BACKGROUND

### 1. Technical Field

The present invention is related to an electrical insulator, especially related to an electrical insulator and its related battery.

### 2. Description of Related Art

Conventionally, to prevent inner short of battery, a separator must be interposed between cathode and anode. The materials of separator usually are polyethylene, polypropylene. The separator which use these materials will easily curled under high temperature operations. Although the sizes of separator are always designed to be larger than the surface area of cathode and anode, the cathode and the anode will still contact and cause inner short of battery when the separator is curled. With the heat generated by inner short, the separator will curled more seriously. Hence, a comprehensive inner short will be triggered, and the thermal runaway will occur.

To solve abovementioned problems, a ceramic coated separator is developed. The ceramic coated separator can undertake under high temperature operations via the characteristics of ceramic. However, the separator is still composed of polymer (e.g., polyethylene, polypropylene), the structure of polymer will change because the heat accumulation under high temperature operations. The separator will still curl and cause inner short. At last, the thermal runaway may still occur.

Accordingly, an electrical insulator and its related battery is disclosed in the present invention to overcome the above problems.

### SUMMARY OF THE INVENTION

The present invention is to provide an electrical insulator and its related battery, which can improve the structural strength of the peripheral of the separation region via the supporting region of the electrical insulator, so that the electrical insulator will not easily curled under high temperature operations.

The present invention is to provide an electrical insulator and its related battery. The supporting region is disposed and covers the peripheral of the separation region, so that the peripheral of separation region will not easily crack, and the probability of inner short can be reduced because the anode will not contact to the cathode easily.

The present invention is to provide an electrical insulator and its related battery, which the process of assembling can be simplified via adhere the supporting region of electrical insulator and the package structure of battery to each other.

To achieve the abovementioned, the present invention discloses an electrical insulator. The electrical insulator comprises a separation region and a supporting region. Wherein, the separation region having two surfaces and a lateral surface, the supporting region is disposed and covers the peripheral of at least one of the surface.

To achieve the abovementioned, the present invention discloses a battery. The battery comprises two electrodes, an electrical insulator and a package structure. The package structure packing the electrodes and the electrical insulator. The electrical insulator comprises a separation region and a supporting region. Wherein, the separation region is orthographically disposed between the active material layers and contacts the active material layers, the supporting region is orthographically disposed between the active material layers and at least parts of the supporting region contact the active material layers.

To achieve the abovementioned, the present invention discloses a battery. The battery comprises two electrodes, an electrical insulator and a sealing frame. The sealing frame is adhered to the current collector layer of electrode and the supporting region of electrical insulator, so that the active material layer of the electrode and the separation region of electrical insulator can be sealed. Wherein, the separation region is orthographically disposed between the active material layers and contacts the active material layers, the supporting region is orthographically disposed between the active material layers and at least a part of the supporting region contact the active material layers.

In electrical insulator and its related battery of the present invention, the peripheral of the electrical insulator will not easily curled under high temperature operations via the supporting region. The probability of contacting between cathode and anode can be reduced. Hence, the inner short of the battery can be prevented.

Below, the embodiments are described in detail in cooperation with the drawings to make easily understood the technical contents, characteristics and accomplishments of the present invention.

### BRIEF DESCRIPTION OF THE DRAWINGS

Fig.1 is a schematic diagram of an embodiment of the electrical insulator of the present invention.
Fig.2 is a schematic diagram of an embodiment of the electrical insulator of the present invention.
Fig.3 is a schematic diagram of an embodiment of the electrical insulator of the present invention.
Fig.4 is a schematic diagram of an embodiment of the electrical insulator of the present invention.
Fig.5 is a schematic diagram of an embodiment of the electrical insulator of the present invention.
Fig.6 is a schematic diagram of an embodiment of the electrical insulator of the present invention.
Fig.7 is a schematic diagram of an embodiment of the battery of the present invention.
Fig.8 is a schematic diagram of an embodiment of the battery of the present invention.
Fig.9 is a schematic diagram of an embodiment of the battery of the present invention.
Fig.10 is a schematic diagram of an embodiment of the battery of the present invention.

### DETAILED DESCRIPTION

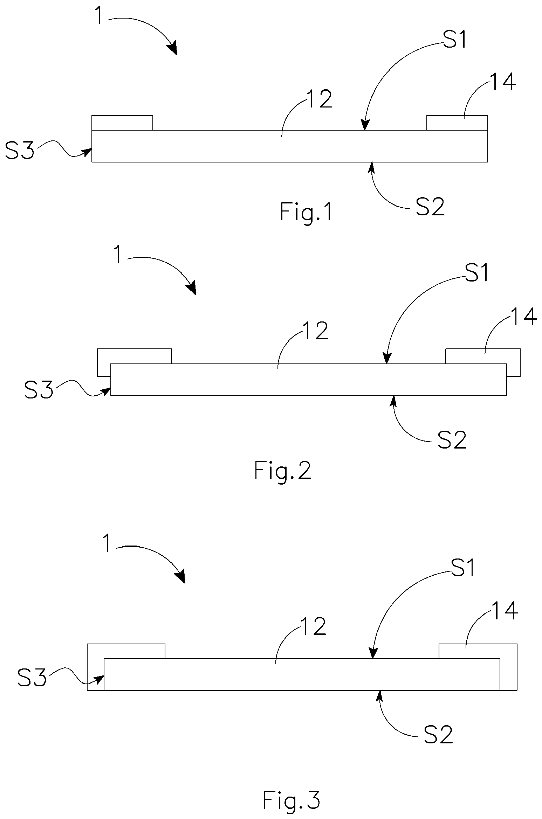

Please refer to the Fig.1 to Fig.6, illustrating six schematic diagrams of the electrical insulator of the present invention. The electrical insulator 1 comprises a separation region 12 and a supporting region 14, wherein, the separation region 12 having two surface S1,S2 and a lateral surface S3 , the supporting region 14 is disposed and covers the peripheral of at least one of the surface S1 or S2 of the separation region 12.

Please refer to Fig.1, the supporting region 14 is disposed and covers the peripheral of the surface S1 of the separation region 12, but does not extend to cover the lateral surface S3 of the separation region 12. Please refer to Fig2, the supporting region 14 is disposed and covers the surface S1 of the separation region 12, and extend to cover parts of the lateral surface S3. Refer to Fig.3, the supporting region 14 is disposed and covers the surface S1 of the separation region 12, and extend to cover all of lateral surface S3.

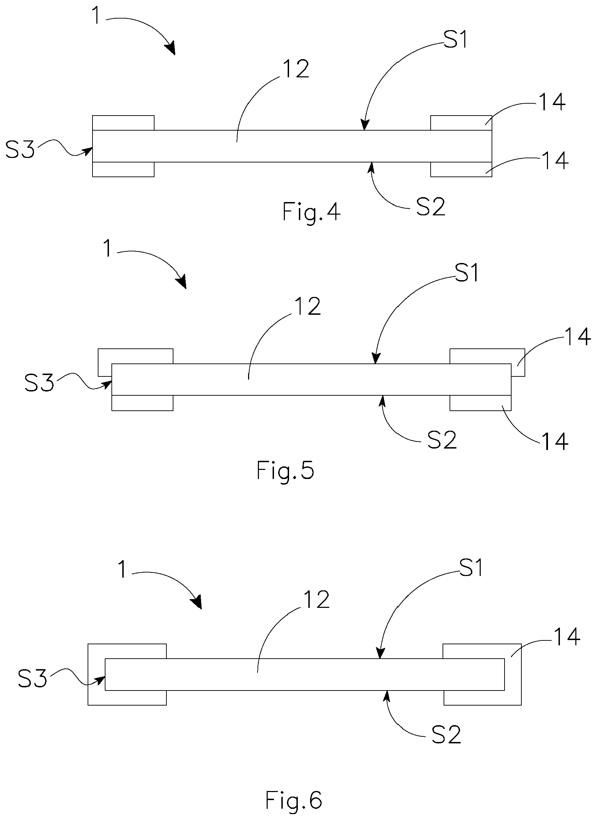

Continued, please refer to Fig.4, the supporting region 14 is disposed and covers the peripheral of two surfaces S1 and S2 of the separation region 12, but does not extend to the lateral surface S3 of the separation region 12. Please refer to Fig.5, the supporting region 14 is disposed and covers two surfaces S1 and S2 of the separation region 12, and extend to cover parts of the lateral surface S3 via one of the surface S1. Please refer to Fig.6, he supporting region 14 is disposed and covers two surfaces S1 and S2 of the separation region 12, and extend to cover all of lateral surface S3.

In above embodiments, the separation region 12 is porous and ionic conductive. In actual operations, the separation region 12 can be made of ceramic separator, polymer separator or ceramic coated polymer separator. The supporting region 14 is flexible and ionic conductive. However, in electrical insulator 1, the main region for ion conduction is the separation region 12, so the supporting region 14 can be made of some specific materials which are not ionic conductive. The supporting region 14 is selected from the group of polymer material, silicone material, epoxy resin material, acrylic material and a combination thereof. In addition, adding some supporting materials which not ionic conductive (e.g., ceramic particles, polymer particles) can improve the structural strength of supporting region 14.(not shown in figure)

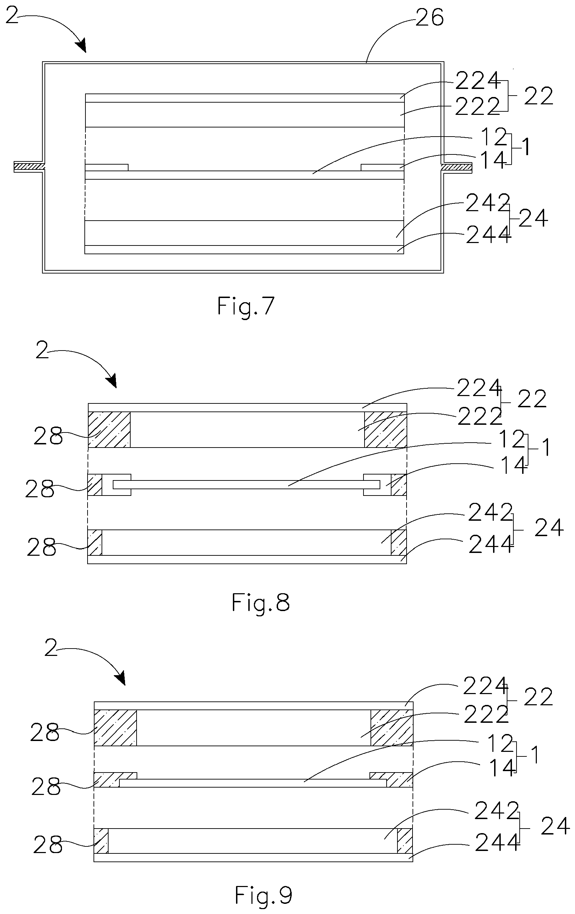

Please refer to the Fig.7 to Fig.9, illustrating three schematic diagrams of the battery of the present invention.

Fig.7 discloses a battery 2. The battery 2 comprises two electrodes 22 and 24, an electrical insulator 1 and a package structure 26. Wherein, the electrodes 22 and 24 each have an active material layer 22 and 24, a current collector layer 224 and 244. Orthographically, the separation region 12 of the electrical insulator 1 is disposed between two active material layers 222 and 242, and contacts the active material layers 222 and 242 at the same time. Orthographically, the supporting region 14 is disposed between two active material layers 222 and 242, and contacts the active material layers 222 and 242 partly, that is, the supporting region 14 covers on the active material layers 222 and 242 directly. The package structure 26 is an independent container, accommodates the electrodes 22, 24 and electrical insulator 1. Here in Fig.7 uses aluminum laminated film package for illustrating. In this embodiment, the battery 2 can be a pouched battery or a flexible battery.

Moreover, please refer to the Fig.8 and Fig.9, the battery 2 comprises two electrodes 22, 24, an electrical insulator 1 and a sealing frame. Similar with the above embodiment, the separation region 12 is disposed between two active material layers 222 and 242 orthographically, and contacts the active material layers 222 and 242 at the same time. The supporting region 14 is disposed between two active material layers 222 and 242, and contacts the active material layers 222 and 242 partly, that is, the supporting region 14 covers the active material layers 222 and 242 directly. Different to the above embodiment, the sealing frame 28 is adhered to the current collector layers 224, 244, and between a part of the supporting region 14. The active material layers 222 and 242, and electrical insulator 12 are completely sealed by the sealing frame 28, the current collector layer 224 and 244, and parts of the supporting region 14. In these embodiments, the battery 2 can be a pouched battery or a flexible battery.

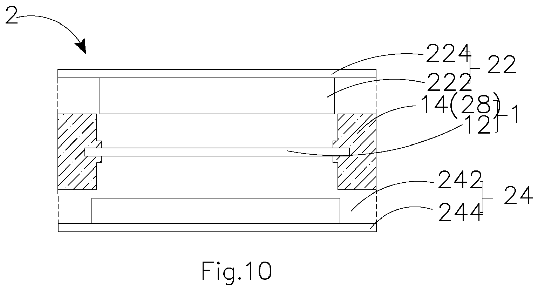

Moreover, please refer to the Fig.10. The supporting region 14 and the sealing frame 28 are integrated into a single structure, so that the active material layers 222 , 242 and the separation region 12 can completely sealed by the adhesion of the supporting region 14 and the current collector layer 224 and 244.

In the above embodiments, in orthographically, the surface area of the electrical insulator (comprising the separation region and the supporting region) is larger than the surface area of the bigger one of the electrodes. Certainly, in the actual situations, the orthographically projection area of the electrical insulator only need to not less than the surface area of the bigger one of the electrodes. However, considering safety issues, the negative electrode usually has the bigger surface area than the positive electrode. The present invention didn't restrict the surface area of electrodes, but the electrical insulator must cover one of the electrodes completely. To the general design of battery, the electrical insulator should cover the negative electrode surely.

More specifically, in the view of separation region of the electrical insulator, especially in the situation of using ceramic materials. Whether the separation region is ceramic separator or ceramic coated polymer separator, the peripheral of separation region is easily crack because of the characteristic of ceramic. Especially, the more close to the edge of electrodes (more specifically, it's the peripheral of active material layers), the separation region cracks more easily. As a result, the separation region disclosed in the present invention has a smaller orthographic projection area than the orthographic projection area of one of the active material layers. The active material here can be positive active material layer or negative active material layer. The separation region should cover the active material layer as much as possible; especially make sure to cover the edge of the active material layer. However, the supporting region is disposed on the peripheral of the active material layer and the peripheral of the separation region to cover the lateral surface of the active material layer and the separation region. The supporting region has more flexibility than the separation region, so that the easily cracked peripheral of the separation region can be protected. In addition, the supporting region can be ionic conductive or not ionic conductive according to the battery design. For example, the proportion of the positive active material and the negative active material (the surface area of the positive active material and the negative active material) is one of a factor to influence the battery design.

Moreover, the above embodiments are not to restrict the scope of the present invention, that is, any kind of electrical insulators can be used in the above mention batteries.

Although not illustrated, a protective layer can be disposed on any one of the outer surface of the current collector layers. The major function of the protective layer is to isolate the current collector layer from external environment (Prevents oxidation, collision, etc.). Also, the protective layer can provide structural strength for the current collector, prevents the wrinkle or rapture of the metal foil after many times of bending or in the situation of over bending. The edge of the current collector layer is covered by the sealing frame, the supporting region which has ability of adhesion, and protective layer. Because the sealing frame, the supporting region which has ability of adhesion, and protective layer are isolated, the chance of outer short by the accidently contact of positive current collector and negative current collector layer can be reduced. The embodiments of edge coated current collector layer can be varied with design of battery or process requirements.

In conclusion of the above mentions, the active material layers of battery are isolated via the separation region and the supporting region of the electrical insulator. The supporting region can further be a barrier between the active material layers and prevent the cracking of the separation region. So as, the situation of inner short can be prevented, and the ceramic battery which has high content of ceramic can be achieved.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An electrical insulator, comprising:
a separation region, having two surface and a lateral surface; and
a supporting region, disposed and covers the peripheral of at least one of the surface.

2. The electrical insulator as claimed in claim 1, wherein the separation region is porous and is ionic conductive.

3. The electrical insulator as claimed in claim 1, wherein the separation region is further a ceramic separator, a polymer separator or a ceramic coated polymer separator.

4. The electrical insulator as claimed in claim 1, wherein the supporting region is ionic conductive or not ionic conductive.

5. The electrical insulator as claimed in claim 1, wherein the supporting region is flexible.

6. The electrical insulator as claimed in claim 1, wherein the supporting region further comprising a supporting material, the supporting material is not conductive.

7. The electrical insulator as claimed in claim 1, wherein the supporting region is further disposed and covers the peripheral of one of the surface and on a part of or all of the lateral surface.

8. The electrical insulator as claimed in claim 1, wherein the supporting region is further disposed and covers the peripheral of two of the surface.

9. The electrical insulator as claimed in claim 1, wherein the supporting region further disposed and covers the peripheral of two of the surface and on parts of or all of the lateral surface.

10. A battery, comprising:
two electrode, each of the electrode has an active material layer and a current collector layer;
an electrical insulator, disposed and contacts the active material layers, makes the active material layers insulated from each other, the electrical insulator comprising:
a separation region, having two surface and a lateral surface, the separation region is orthographically disposed between the active material layers and contacts the active material layers; and
a supporting region, disposed and covers the peripheral of at least one of the surface, the supporting region is orthographically disposed between the active material layers, at least a part of the supporting region contact the active material layers; and
a package structure, packing the electrodes and the electrical insulator.

11. The battery as claimed in claim 10, wherein the electrical insulator is orthographically covers one of the electrode, the active material layer is a positive active material layer or a negative active material layer.

12. The battery as claimed in claim 10, wherein the orthographic projection area of the separation region is not larger than orthographic projection area of one of the active material layer, the active material layer is a positive active material layer or a negative active material layer.

13. The battery as claimed in claim 10, wherein the separation region is further a ceramic separator, a polymer separator or a ceramic coated polymer separator.

14. The battery as claimed in claim 10, wherein the supporting region further disposed and covers the peripheral of one of the surface and on a part of or all of the lateral surface.

15. The battery as claimed in claim 10, wherein the supporting region further disposed and covers the peripheral of two of the surface.

16. The battery as claimed in claim 10, wherein the supporting region further disposed and covers the peripheral of two of the surface and on a part of or all of the lateral surface.

17. The battery as claimed in claim 10, wherein the package structure is further an independent container, accommodates the electrodes and the electrical insulator.

18. The battery as claimed in claim 10, wherein an outer surface of at least one of the current collector layer is further comprising a protective layer.

19. A battery, comprising:
two electrode, each of the electrode has an active material layer and a current collector layer;
an electrical insulator, disposed and contacts the active material layers, makes the active material layers insulated from each other, the electrical insulator comprising:
a separation region, having two surface and a lateral surface, the separation region is orthographically disposed between the active material layers and contacts the active material layers; and
a supporting region, disposed and covers the peripheral of at least one of the surface, the supporting region is orthographically disposed between the active material layers, at least parts of the supporting region contact the active material layers; and
a sealing frame, adhered to the current collectors and at least parts of the supporting area, sealing the active materials and the separation region.

20. The battery as claimed in claim 19, wherein the electrical insulator is orthographically covers of the electrode, the active material layer is a positive active material layer or a negative active material layer.

21. The battery as claimed in claim 19, wherein the orthographic projection area of the separation region is not larger than orthographic projection area of one of the active material layer, the active material layer is a positive active material layer or a negative active material layer.

22. The battery as claimed in claim 19, wherein the supporting region further disposed and covers the peripheral of one of the surface and on a part of or all of the lateral surface.

23. The battery as claimed in claim 19, wherein the supporting region further disposed and covers the peripheral of two of the surface.

24. The battery as claimed in claim 19, wherein the supporting region further disposed and covers the peripheral of two of the surface and on a part of or all of the lateral surface.

25. The battery as claimed in claim 19, wherein an outer surface of at least one of the current collector layer is further comprises a protective layer.
